# EUROPÄISCHE PATENTSCHRIFT

(11) **EP 3 112 214 B1**
(45) Veröffentlichungstag und Bekanntmachung des Hinweises auf die Patenterteilung: **24.03.2021**
(21) Anmeldenummer: 16169126.6
(22) Anmeldetag: 11.05.2016
(51) Int. Cl.: B60Q 1/14, B60Q 1/08, G08G 1/16

(54) **VERFAHREN ZUM STEUERN EINES SCHEINWERFERS EINES FAHRZEUGS, VERFAHREN ZUM GENERIEREN VON POSITIONSDATEN ZUM STEUERN EINES SCHEINWERFERS EINES FAHRZEUGS UND VERFAHREN ZUM BETREIBEN EINER LICHTANLAGE EINES FAHRZEUGS**
METHOD FOR CONTROLLING A HEADLIGHT OF A VEHICLE, METHOD FOR GENERATING POSITION DATA FOR CONTROLLING A HEADLIGHT OF A VEHICLE AND METHOD FOR OPERATING A LIGHTING SYSTEM OF A VEHICLE
PROCEDE DE COMMANDE D'UN PHARE DE VEHICULE AUTOMOBILE, PROCEDE DE PRODUCTION DE DONNEES DE POSITION DESTINEES A COMMANDER UN PHARE DE VEHICULE AUTOMOBILE ET PROCEDE DE FONCTIONNEMENT D'UN DISPOSITIF D'ECLAIRAGE DE VEHICULE AUTOMOBILE

(30) Priorität: 02.07.2015 DE 102015212425
(43) Veröffentlichungstag der Anmeldung: 04.01.2017
(73) Patentinhaber: Robert Bosch GmbH, 70442 Stuttgart (DE)
(72) Erfinder: Blaschke, Volker, 74321 Bietigheim-Bissingen (DE); Lothspeich, Timo, 71287 Weissach (DE); Poehnl, Michael, 75449 Wurmberg (DE); Abendroth, Stefan, 70563 Stuttgart (DE); Doering, Michael Ernst, 71272 Renningen (DE)

(56) Entgegenhaltungen:
- EP-A1- 1 707 438
- WO-A1-2011/047751
- DE-A1-102009 050 282
- DE-A1-102010 038 961
- DE-A1-102011 076 644
- DE-A1-102012 018 488
- US-B1- 7 005 977

## Beschreibung

### Stand der Technik

Die Erfindung geht aus von einem Verfahren oder einer Vorrichtung nach Gattung der unabhängigen Ansprüche. Gegenstand der vorliegenden Erfindung ist auch ein Computerprogramm.

Die DE 10 2011108 384 A1 beschreibt einen Scheinwerfer mit einer Matrix aus einzeln ansteuerbaren Leuchtdioden, die ein exaktes Anleuchten oder Anblinken von Objekten oder auch ein exaktes Ausblenden von Objekten aus einem Scheinwerferkegel ermöglichen. Die Ansteuerung der Matrix erfolgt insbesondere auf der Basis von durch das Fahrzeug bereitgestellten Kameradaten.

Die Druckschrift DE 10 2010 038961 A1 offenbart ein Verfahren und eine Vorrichtung zum Bestimmen einer Empfehlung für eine Strahlungscharakteristik zumindest eines Schweinwerfers eines Fahrzeugs.

Die Druckschrift EP 1 707 438 A offenbart ein Kraftfahrzeug mit einer Beleuchtungseinrichtung mit veränderbarem Ausleuchtvolumen.

Die Druckschrift DE 10 2012 018488 A1 offenbart eine Fahrzeugbeleuchtungssteuerung.

Die Druckschrift DE 10 2009 050282 A1 offenbart eine Vorrichtung und Verfahren zur Steuerung zumindest eines Scheinwerfers eines Fahrzeugs.

Die Druckschrift DE 10 2011 076644 A1 offenbart ein Verfahren zum Steuern einer variablen Lichtverteilung eines Scheinwerfers eines Kraftfahrzeugs.

Die Druckschrift WO 2011/047751 A1 offenbart ein Vorrichtung zur Steuerung eines Fahrlichts eines Fahrzeugs.

Die Druckschrift US 7 005 977 B1 offenbart ein System und ein Verfahren zum Liefern einer drahtlosen Kommunikation zwischen Fahrzeugen.

### Offenbarung der Erfindung

Vor diesem Hintergrund werden mit dem hier vorgestellten Ansatz ein Verfahren zum Steuern eines Scheinwerfers eines Fahrzeugs, ein Verfahren zum Generieren von Positionsdaten zum Steuern eines Scheinwerfers eines Fahrzeugs, ein Verfahren zum Betreiben einer Lichtanlage eines Fahrzeugs, weiterhin eine Vorrichtung, die diese Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Es wird ein Verfahren zum Steuern eines Scheinwerfers eines Fahrzeugs vorgestellt, wobei das Verfahren folgende Schritte umfasst:
Einlesen eines durch ein Objekt oder einer Beobachtereinheit bereitgestellten und eine Position des Objekts repräsentierenden Objektpositionssignals und eines eine Position des Fahrzeugs repräsentierenden Fahrzeugpositionssignals;
Vergleichen der Position des Fahrzeugs und der Position des Objekts unter Verwendung des Objektpositionssignals und des Fahrzeugpositionssignals, um eine relative Position des Fahrzeugs zum Objekt zu ermitteln; und
Erzeugen eines Steuersignals zum Steuern des Scheinwerfers in Abhängigkeit von der relativen Position des Fahrzeugs zum Objekt

Das erfindungsgemäße Verfahren ist in Anspruch 1 definiert.

Unter einer Beobachtereinheit kann ein Sensor verstanden werden, der ausgebildet ist, um das Objekt zu erkennen und seine Position zu bestimmen. Beispielsweise erkennt ein Fahrzeug per Sensorik (Radar, Ultraschall, Kamera) ein Objekt, von dem es selbst keine Position empfangen hat. In diesem Fall kann das erkennende Objekt bzw. die Beobachtereinheit die Position des erkannten Objekt bestimmen und diese Information gegebenenfalls mit einer Zusatzinformation die eine Ungenauigkeit der Position beinhaltet bereit stellen. Unter einem Scheinwerfer kann beispielsweise ein rechter oder linker Frontscheinwerfer oder ein seitlich am Fahrzeug angeordneter Scheinwerfer oder ein lichtstarker Zusatzscheinwerfer (wie sie teilweise im Ausland üblich sind) verstanden werden. Unter einem Fahrzeug kann ein Kraftfahrzeug wie etwa ein Pkw, Lkw oder ein Motorrad verstanden werden. Bei dem Objekt kann es sich beispielsweise um ein weiteres Fahrzeug, insbesondere ein entgegenkommendes Fahrzeug, eine Person, ein Tier oder eine Fassade oder insbesondere einen spezifischen Teil einer Fassade wie beispielsweise ein Fenster eines Gebäudes handeln. Entsprechend kann das Objekt beweglich oder unbeweglich sein. Das Objekt kann eine Vorrichtung zum Bereitstellen des Objektpositionssignals aufweisen. Die Vorrichtung kann beispielsweise ein GPS-Modul zum Ermitteln der Position und Generieren des Objektpositionssignals und ein Kommunikationsmodul zum Senden des Objektpositionssignals aufweisen und als Komponente eines Mobiltelefons oder als implantierbarer Chip realisiert sein. Das Fahrzeugpositionssignal kann beispielsweise durch das Fahrzeug bereitgestellt sein.

Der hier vorgestellte Ansatz beruht auf der Erkenntnis, dass durch die Verwendung von Positions- statt Kameradaten zur Ansteuerung eines Scheinwerfers eines Fahrzeugs die Komplexität einer solchen Ansteuerung deutlich reduziert werden kann. Beispielsweise können die Positionsdaten verwendet werden, um Objekte aus einem Abblend- oder Fernlicht auszublenden.

Zur automatisierten (Fern-)Lichtsteuerung von Fahrzeugen kommen heutzutage üblicherweise kamerabasierte Systeme zum Einsatz, wobei das Kamerabild mittels sogenannter Klassifikatoren auf relevante Objekte wie etwa entgegenkommende Fahrzeuge hin untersucht werden kann. Auf Basis der erkannten Objekte können anschließend weitere Aktionen wie beispielsweise Abblenden, partielles Aussparen von Objekten aus einem Fernlichtkegel oder punktuelles Anleuchten erkannter Objekten ausgelöst werden.

Bei den zur Objektdetektion notwendigen Trackern und Klassifikatoren handelt es zumeist um hochkomplexe Rechenverfahren, die auf entsprechend ressourcenstarken Recheneinheiten im Fahrzeug berechnet werden können. Der vorliegende Ansatz schafft nun ein Verfahren, durch das die Bestimmung von Positionen relevanter Objekte mit deutlich geringerem Kosten- und Energieaufwand erfolgen kann, zumal auf die aufwendige und teure Entwicklung neuer Klassifikatoren zur Erkennung neuer Objekttypen oder zur Anpassung an verschiedene Fahrzeugmodelle sowie auf einen in bestimmten Konstellationen erforderlichen, rechenintensiven Parallelbetrieb neuer und bereits existierender Klassifikatoren verzichtet werden kann. Mithilfe des hier vorgestellten Ansatzes ist es möglich, auf eine derartige Objekterkennung und damit auf rechenintensive Klassifizierungsalgorithmen und deren zeitaufwendige Applikation zu verzichten. Dadurch kann auch die aufwendige Aktualisierung von Klassifikationsalgorithmen für bereits im Feld befindliche Fahrzeuge entfallen.

Bislang werden üblicherweise nur solche Objekte erkannt oder berücksichtigt, für die im Vorfeld spezielle Algorithmen entwickelt und aufwendig appliziert wurden. Beispielsweise werden statische Objekte wie Fenster in einer Häuserfassade nicht explizit in heutigen Fahrzeugsystemen berücksichtigt. Der hier vorgestellte Ansatz ermöglicht es, auf eine aufwendige künstliche Objekterkennung zu verzichten. Eine systembedingte Einschränkung auf eine Untermenge erkennbarer Objekte aufgrund der im Fahrzeug verfügbaren Ressourcen kann somit vermieden werden. Insbesondere eignet sich das nachfolgend beschriebene Verfahren gemäß einer Ausführungsform des vorliegenden Ansatzes zum Ausblenden solcher statischer Objekte.

Systembedingt ist die Erkennung unbeleuchteter Objekte, die eine ähnliche Oberflächentemperatur wie ihre Umgebung aufweisen, etwa ein Fenster in einem Haus, mithilfe einer heute in Fahrzeugen üblichen kamerabasierten, (bzw. Infrarot-kamerabasierten) Objekterkennung nur schwer realisierbar. Zudem kann sich die Bereitstellung eines Klassifikators für seltene oder einzigartige und gegebenenfalls zeitlich begrenzt auftretende Objekttypen, etwa eine spezifische Brutstätte einer seltenen Vogelart, aus ökonomischer Sicht als ungünstig erweisen. Durch den Verzicht auf eine kamerabasierte Objekterkennung kann die Ansteuerung der Lichtanlage eines Fahrzeugs mit deutlich geringeren Kosten umgesetzt werden.

Durch ein positions- oder navigationsunterstütztes Verfahren gemäß dem hier vorgestellten Ansatz kann also die Komplexität der Ansteuerung deutlich reduziert werden. So können auch die Kosten und der Energiebedarf im Fahrzeug gesenkt werden.

Gemäß einer Ausführungsform kann im Schritt des Erzeugens das Steuersignal bereitgestellt werden, um den Scheinwerfer abzublenden. Zusätzlich oder alternativ kann das Steuersignal bereitgestellt werden, um einen Scheinwerferstrahl vom Objekt wegzulenken oder auf das Objekt hinzulenken. Dadurch kann verhindert werden, dass andere Verkehrsteilnehmer durch einen vom Scheinwerfer ausgesandten Lichtkegel geblendet werden. Das Fahrzeug kann hierbei ein Objekt anleuchten um den Fahrer des Fahrzeugs auf das Objekt aufmerksam (beispielsweise Wild oder Person, oder auch Verkehrs- und Hinweisschilder) zu machen..Zusätzlich oder alternativ kann durch diese Ausführungsform beispielsweise eine automatische Lichthupenfunktion realisiert werden, indem der Scheinwerfer gezielt auf bestimmte Objekte, insbesondere auf Personen, gerichtet wird, um das betreffende Objekt auf das herannahende Fahrzeug aufmerksam zu machen.

Erfindungsgemäss wird der Schritt des Erzeugens durch eine von dem Fahrzeug getrennte Datenverarbeitungseinheit ausgeführt. Es ist ferner vorteilhaft, wenn zumindest einer der Schritte des Einlesens und Vergleichens durch die von dem Fahrzeug getrennte

Datenverarbeitungseinheit ausgeführt wird. Insbesondere kann in einem Schritt des Übertragens das Steuersignal durch die Datenverarbeitungseinheit an das Fahrzeug übertragen werden. Unter einer Datenverarbeitungseinheit kann beispielsweise eine über geeignete Schnittstellen mit dem Objekt und dem Fahrzeug verbundene Datenbank, etwa in Form eines Servers, verstanden werden. Beispielsweise kann es sich bei der Datenverarbeitungseinheit um eine zentrale Einheit oder eine Einheit aus mehreren geografisch verteilten und gegebenenfalls miteinander vernetzten Untereinheiten handeln. Dadurch kann eine besonders ressourcensparende Ansteuerung des Scheinwerfers realisiert werden.

Gemäß einer weiteren Ausführungsform kann das Verfahren mit einem Schritt des Ermittelns einer Sichtverbindung zwischen dem Fahrzeug und dem Objekt unter Verwendung des Objektpositionssignals und des Fahrzeugpositionssignals vorgesehen sein. Hierbei kann im Schritt des Erzeugens das Steuersignal erzeugt werden, wenn im Schritt des Ermittelns ermittelt wurde, dass eine Sichtverbindung zwischen dem Fahrzeug und dem Objekt besteht. Dadurch kann die Effizienz des Verfahrens erhöht werden.

Von Vorteil ist auch, wenn im Schritt des Einlesens ferner ein durch das Objekt bereitgestelltes und eine Trajektorie des Objekts repräsentierendes Objekttrajektoriensignal eingelesen wird. Hierbei kann im Schritt des Vergleichens die Position des Fahrzeugs unter Verwendung des Objekttrajektoriensignals ferner mit der Trajektorie des Objekts verglichen werden, um die relative Position des Fahrzeugs zum Objekt zu bestimmen. Beispielsweise kann das Objekttrajektoriensignal dazu verwendet werden, um anhand eines Bewegungsverlaufs des Objekts eine zukünftige Position des Objekts vorherzusagen und die relative Position anhand eines Vergleichs einer aktuellen oder einer zukünftigen Position des Objekts mit der zukünftigen Position zu ermitteln. Dadurch kann die Genauigkeit und Zuverlässigkeit der Positionsbestimmung verbessert werden.

Zudem kann im Schritt des Einlesens eine zusätzliche Objektinformation, insbesondere eine Information über einen Objekttyp, eingelesen werden. Entsprechend kann im Schritt des Erzeugens das Steuersignal unter Verwendung der zusätzlichen Objektinformation erzeugt werden. Unter einer Objektinformation kann eine optionale Metainformation zur weiteren Charakterisierung des Objekts verstanden werden. Bei dem Objekttyp kann es sich etwa um einen sogenannten Klassifikator handeln. Beispielsweise kann mittels des Objekttyps ermittelt werden, ob es sich bei dem Objekt um einen Menschen, ein Tier, ein Fenster oder eine Vogelbrutstätte handelt. Zusätzlich oder alternativ kann die Objektinformation einen Zeitstempel umfassen. Auch durch diese Ausführungsform kann die Genauigkeit des Verfahrens verbessert werden.

Ferner kann im Schritt des Einlesens ein durch das Objekt bereitgestelltes und eine weitere Position des Objekts repräsentierendes weiteres Objektpositionssignal eingelesen werden. Im Schritt des Vergleichens können die Position des Fahrzeugs und die weitere Position des Objekts unter Verwendung des weiteren Objektpositionssignals miteinander verglichen werden, um die relative Position des Fahrzeugs zum Objekt zu ermitteln. Bei der weiteren Position kann es sich etwa um eine aktuelle oder beispielsweise unter Verwendung einer Trajektorie des Objekts vorhergesagte zukünftige Position des Objekts handeln. Beispielsweise kann im Schritt des Einlesens ein Aktualisierungssignal zum Aktualisieren der Position des Objekts als weiteres Objektpositionssignal eingelesen werden. Dementsprechend können im Schritt des Vergleichens die Position des Fahrzeugs und eine unter Verwendung des Aktualisierungssignals aktualisierte Position des Objekts miteinander verglichen werden, um die relative Position des Fahrzeugs zum Objekt zu ermitteln. Durch diese Ausführungsform kann sichergestellt werden, dass zwischen einer ermittelten und einer tatsächlichen relativen Position des Fahrzeugs zum Objekt eine möglichst geringe Abweichung besteht.

Der hier vorgestellte Ansatz schafft ferner ein Verfahren zum Generieren von Positionsdaten zum Steuern eines Scheinwerfers eines Fahrzeugs, wobei das Verfahren den folgenden Schritt umfasst:
Bereitstellen eines eine Position eines Objekts repräsentierenden Objektpositionssignals durch das Objekt.

Hierbei kann im Schritt des Bereitstellens das Objektpositionssignal je nach Ausführungsform per Geocast, Broadcast, Multicast Unicast oder über eine Schnittstelle zu einer von dem Fahrzeug getrennten Datenverarbeitungseinheit bereitgestellt werden. Unter dem Begriff Geocast kann ein Kommunikationsmechanismus verstanden werden, durch den ein Signal innerhalb eines Netzwerks an ein räumlich abgegrenztes Gebiet gesandt werden kann. Beispielsweise kann das Objektpositionssignal per Geocast an mehrere innerhalb eines relevanten geografischen Bereichs befindliche Fahrzeuge gesandt werden. Unter dem Begriff Unicast kann ein Kommunikationsmechanismus verstanden werden, durch den ein Signal innerhalb eines Netzwerks an einen bestimmten einzelnen Empfänger, etwa das Fahrzeug, gesandt werden kann. Unicast eignet sich beispielsweise zum Austausch von Daten zwischen einzelnen Fahrzeugen. Durch diese Ausführungsform wird eine ressourcenschonende und gleichzeitig möglichst flächendeckende Verbreitung des Objektpositionssignals ermöglicht.

Gemäß einer Ausführungsform kann im Schritt des Bereitstellens zumindest ein eine weitere Position des Objekts repräsentierendes weiteres Objektpositionssignal durch das Objekt bereitgestellt werden, wenn nachfolgend auf ein Bereitstellen des Objektpositionssignals das Objekt eine vorgegebene Entfernung zurückgelegt hat, eine vorgegebene Zeitspanne abgelaufen ist oder wenn die weitere Position des Objekts um einen vorgegebenen Abweichungswert von der durch das Objektpositionssignal repräsentierten Position des Objekts abweicht. Dadurch kann sichergestellt werden, dass die zur Ermittlung der relativen Position des Fahrzeugs zum Objekt erforderlichen Positionsdaten möglichst aktuell und genau sind. Somit können Ungenauigkeiten bei der Ansteuerung des Scheinwerfers vermieden werden.

Der hier beschriebene Ansatz schafft weiterhin ein Verfahren zum Betreiben einer Lichtanlage eines Fahrzeugs, in dem die Schritte des Verfahrens zum Steuern eines Scheinwerfers gemäß einer der hier beschriebenen Ausführungsformen in Kombination mit den Schritten des Verfahrens zum Generieren von Positionsdaten gemäß einer der hier beschriebenen Ausführungsformen ausgeführt werden können.

Die vorstehend beschriebenen Verfahren können beispielsweise in Software oder Hardware oder in einer Mischform aus Software und Hardware beispielsweise in einem Steuergerät implementiert sein.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele sind in den Zeichnungen dargestellt und in der nachfolgenden Beschreibung näher erläutert. Es zeigt:
Fig. 1 eine schematische Darstellung einer Verkehrssituation mit zwei einander entgegenkommenden Fahrzeugen mit eingeschalteten Scheinwerfern;
Fig. 2 eine schematische Darstellung eines partiell ausgesparten Fernlichtkegels;
Fig. 3 eine schematische Darstellung einer Datenübertragung zwischen mehreren Fahrzeugen und einer Datenverarbeitungseinheit zur Verwendung in einem Verfahren gemäß einem Ausführungsbeispiel;
Fig. 4 ein Ablaufdiagramm eines Ausführungsbeispiels eines Verfahrens zum Betreiben einer Lichtanlage für ein Fahrzeug;
Fig. 5 ein Ablaufdiagramm eines Ausführungsbeispiels eines Verfahrens zum Betreiben einer Lichtanlage für ein Fahrzeug;
Fig. 6 ein Ablaufdiagramm eines Ausführungsbeispiels eines Verfahrens zum Steuern eines Scheinwerfers eines Fahrzeugs;
Fig. 7 ein Ablaufdiagramm eines Ausführungsbeispiels eines Verfahrens zum Generieren von Positionsdaten zum Steuern eines Scheinwerfers eines Fahrzeugs;
Fig. 8 ein Blockschaltbild eines Ausführungsbeispiels einer Vorrichtung zum Steuern eines Scheinwerfers eines Fahrzeugs; und
Fig. 9 ein Blockschaltbild eines Ausführungsbeispiels einer Vorrichtung zum Generieren von Positionsdaten zum Steuern eines Scheinwerfers eines Fahrzeugs.

In der nachfolgenden Beschreibung günstiger Ausführungsbeispiele werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

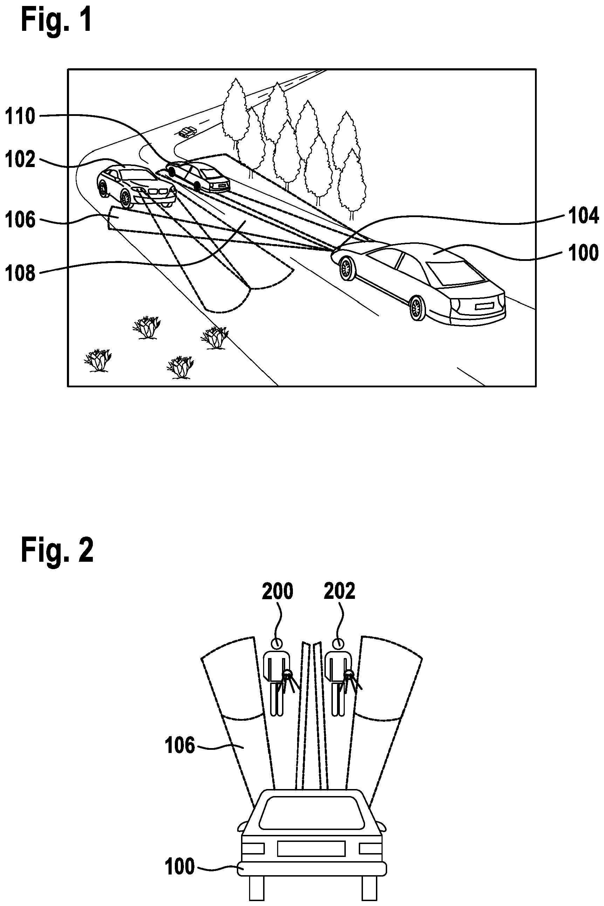

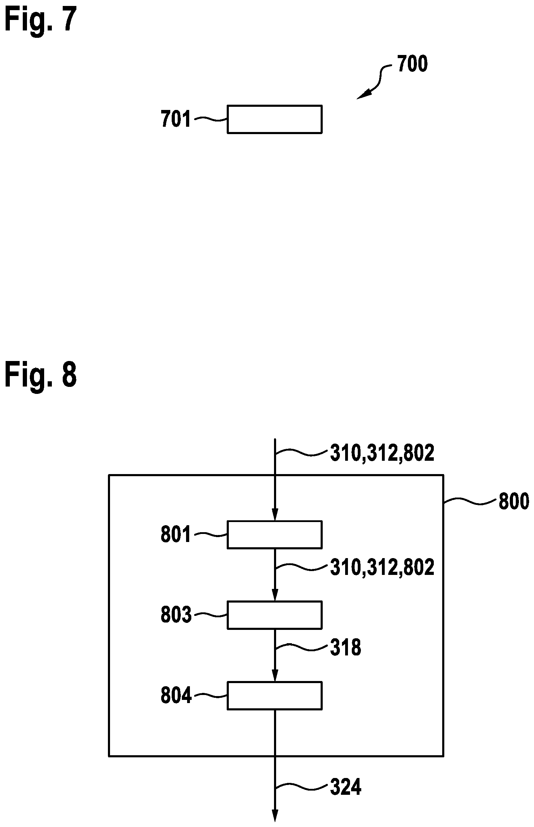

Fig. 1 zeigt eine schematische Darstellung einer Verkehrssituation mit zwei einander entgegenkommenden Fahrzeugen 100, 102 mit eingeschalteten Scheinwerfern. Das Fahrzeug 100 ist mit einer nachfolgend anhand von Fig. 8 näher beschriebenen Vorrichtung zum Steuern eines Scheinwerfers 104 des Fahrzeugs 100 ausgestattet oder verbunden. Die Vorrichtung kann Positionsdaten bezüglich einer Position des Fahrzeugs 102 empfangen und diese verwenden, um einen Scheinwerferkegel 106 des Scheinwerfers 104 derart anzupassen, dass das Fahrzeug 102 nicht geblendet wird. Bei dem Scheinwerferkegel 106 handelt es sich beispielsweise um einen Fernlichtkegel. Beispielsweise weist der Scheinwerferkegel 106 im Bereich des entgegenkommenden Fahrzeugs 102 eine entsprechende Aussparung 108 auf.

Mittels der Vorrichtung kann das Fahrzeug 100 vorausfahrende 110 und entgegenkommende Objekte 102 erkennen und diese individuell aus dem eigenen Fernlichtkegel 106 ausblenden.

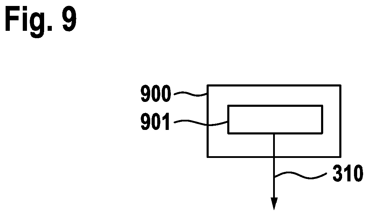

Fig. 2 zeigt eine schematische Darstellung eines partiell ausgesparten Fernlichtkegels 106. Bei dem Fernlichtkegel 106 handelt es sich beispielsweise um den anhand von Fig. 1 beschriebenen Fernlichtkegel. Der Fernlichtkegel 106 ist aus einer Fahrerperspektive gezeigt. Zu sehen sind zwei mit einer Lichtquelle ausgestattete Fußgänger 200, 202. Die Fußgänger 200, 202 übertragen ihre Positionsdaten mittels einer nachfolgend anhand von Fig. 9 näher beschriebenen Vorrichtung an das Fahrzeug 100, wobei die Vorrichtung nicht erfindungsemäß ist. Das Fahrzeug 100 steuert seine Scheinwerfer unter Verwendung der Positionsdaten derart an, dass die beiden Fußgänger 200, 202 aus dem Fernlichtkegel 106 individuell ausgeblendet werden.

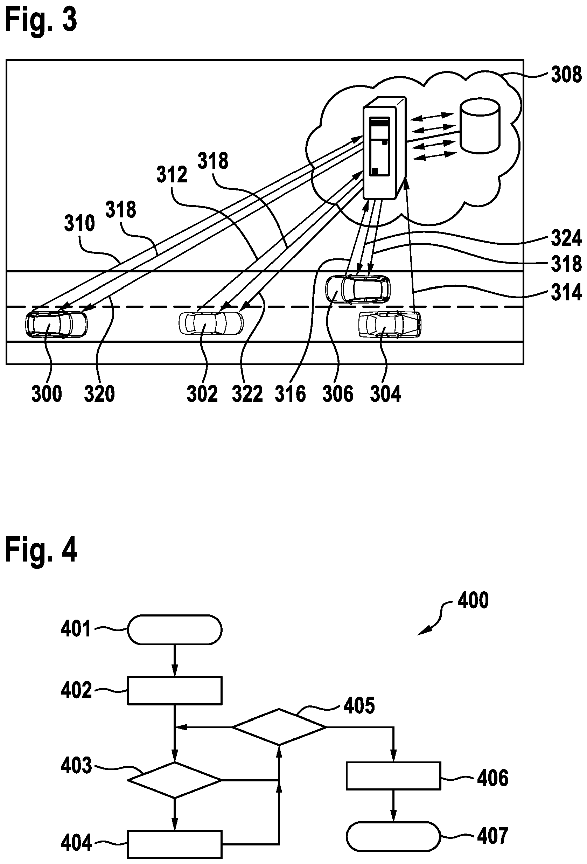

Fig. 3 zeigt eine schematische Darstellung einer Datenübertragung zwischen mehreren Fahrzeugen 300, 302, 304, 306 und einer Datenverarbeitungseinheit 308 zur Verwendung in einem Verfahren gemäß einem Ausführungsbeispiel, etwa eines Verfahrens, wie es nachfolgend anhand der Figuren 4 bis 6 beschrieben ist. Gemäß diesem Ausführungsbeispiel erfolgt die Datenübertragung zur Positionsdatenspeicherung in einer zentralisierten Datenbank als Datenverarbeitungseinheit 308 sowie zur Positionsdatenaktualisierung für die vier Fahrzeuge 300, 302, 304, 306.

Die Positionsdatenspeicherung basiert darauf, dass ein erstes Fahrzeug 300 ein eine Position des ersten Fahrzeugs 300 repräsentierendes erstes Objektpositionssignal 310, ein zweites Fahrzeug 302 ein eine Position des zweiten Fahrzeugs 302 repräsentierendes zweites Objektpositionssignal 312, ein drittes Fahrzeug 304 ein eine Position des dritten Fahrzeugs 304 repräsentierendes drittes Objektpositionssignal 314 und ein viertes Fahrzeug 306 ein eine Position des vierten Fahrzeugs 306 repräsentierendes viertes Objektpositionssignal 316 bereitstellt und an die Datenverarbeitungseinheit 308 überträgt.

Die Datenverarbeitungseinheit 308 ist , in einer nicht erfindungsgemäßen Variante dieses Ausführungsbeispiels, ausgebildet, um die empfangenen Objektpositionssignale an alle Fahrzeuge zu verteilen, sodass jedes Fahrzeug über die jeweilige Position der anderen Fahrzeuge informiert ist. Beispielsweise ermitteln die Fahrzeuge unter Verwendung der von der Datenverarbeitungseinheit 308 empfangenen Objektpositionssignale sowie von Positionsdaten bezüglich ihrer eigenen aktuellen Position eine relative Position zwischen sich und einem oder mehreren der anderen Fahrzeuge. In Abhängigkeit von dieser ermittelten relativen Position erfolgt nun die Ansteuerung der jeweiligen Scheinwerfer der Fahrzeuge. In Fig. 3 fährt das Fahrzeug 306 den beiden Fahrzeugen 300, 302 entgegen. So ist es beispielsweise möglich, dass die drei Fahrzeuge 300, 302, 306 ihren jeweiligen Lichtkegel in Abhängigkeit von der jeweils ermittelten relativen Position derart anpassen, dass weder die beiden Fahrzeuge 300, 302 durch das Fahrzeug 306 geblendet werden noch das Fahrzeug 306 durch die beiden Fahrzeuge 300, 302 geblendet wird.

In einer weiteren nicht erfindungsgemäßen Variante des Ausführungsbeispiels ist die Datenverarbeitungseinheit 308 ausgebildet, um durch einen Vergleich der Objektpositionssignale 310, 312, 314, 316 die relative Position zwischen den vier Fahrzeugen 300, 302, 304, 306 selbst zu ermitteln und diese in Form eines entsprechenden Positionssignals 318 an relevante Fahrzeuge, in Fig. 3 etwa das erste Fahrzeug 300, das zweite Fahrzeug 302 und das vierte Fahrzeug 306, weiterzuleiten. Dieses Positionssignal 318 wird von den betreffenden Fahrzeugen zur Ansteuerung ihrer jeweiligen Scheinwerfer verwendet.

In der erfindungsgemäßen Variante des Ausführungsbeispiels, erzeugt die Datenverarbeitungseinheit 308 in Abhängigkeit von der ermittelten relativen Position Steuersignale zum Steuern der jeweiligen Scheinwerfer der relevanten Fahrzeuge und überträgt diese an die entsprechenden Fahrzeuge. So sendet die Datenverarbeitungseinheit 308 beispielsweise ein erstes Steuersignal 320 an das erste Fahrzeug 300, um den Scheinwerfer des ersten Fahrzeugs 300 zu steuern, ein zweites Steuersignal 322 an das zweite Fahrzeug 302, um einen Scheinwerfer des zweiten Fahrzeugs 302 zu steuern, und ein drittes Steuersignal 324 an das vierte Fahrzeug 306, um einen Scheinwerfer des vierten Fahrzeugs 306 zu steuern.

Gemäß einem Ausführungsbeispiel fungieren die vier Fahrzeuge 300, 302, 304, 306 als Datenerzeuger zum Erzeugen von Positionsdaten, die diese in Form entsprechender Objektpositionssignale an die Datenverarbeitungseinheit 308 in Form einer Datenbank senden. Die Datenverarbeitungseinheit 308 kann je nach Ausführungsform zentralisiert, verteilt oder redundant realisiert sein. In der Datenverarbeitungseinheit 308 ist, in einer nicht erfindungsgemäßen Variante des Ausführungsbeispiels, eine Logik hinterlegt, die bewertet, welche Positionsdaten von welchem Datennutzer benötigt werden, und die entsprechenden Positionsdaten an die relevanten Datennutzer weiterleitet. Beispielsweise fungiert in Fig. 3 das vierte Fahrzeug 306 als Datennutzer und die beiden Fahrzeuge 300, 302 als Datenerzeuger. Denkbar ist jedoch auch, dass zumindest eines der drei Fahrzeuge sowohl als Datennutzer wie auch als Datenerzeuger fungiert.

Für die Bewertung der Positionsdaten durch die Datenverarbeitungseinheit 308 sind folgende, gegebenenfalls miteinander kombinierbare Möglichkeiten denkbar. Zum einen dient die Logik beispielsweise dazu, um eine geografische Nähe zwischen den Datenerzeugern und den Datennutzern zu bewerten. Hierbei obliegt es den Datennutzern, in Fig. 3 also dem vierten Fahrzeug 306, zu prüfen, inwieweit eine Sichtverbindung zwischen den Datenerzeugern und den Datennutzern besteht, und eine entsprechende Ansteuerstrategie zum Ansteuern der Scheinwerfer abzuleiten.

Eine weitere nicht erfindungsgemäße Möglichkeit besteht darin, dass die Logik selbst prüft, ob eine Sichtverbindung zwischen den Datenerzeugern und den Datennutzern besteht, sodass lediglich die Ansteuerstrategie durch das als Datennutzer fungierende Fahrzeug berechnet wird.

Gemäß einer erfindungsgemäßen Möglichkeit ermittelt die Logik zusätzlich die Ansteuerstrategie und stellt diese dem betreffenden Datennutzer zur Verfügung.

Fig. 4 zeigt ein Ablaufdiagramm eines Ausführungsbeispiels eines Verfahrens 400 zum Betreiben einer Lichtanlage für ein Fahrzeug. Der Ablauf des in Fig. 4 gezeigten Verfahrens 400 bezieht sich insbesondere auf einen beweglichen Datenerzeuger. Das Verfahren 400 kann beispielsweise im Zusammenhang mit einem oder mehreren anhand der Figuren 1 bis 3 beschriebenen Fahrzeuge ausgeführt werden.

Anstatt einer aufwendigen optischen Objekterkennung werden je nach Ausführungsform Positions- und Bewegungsdaten von Datenerzeugern generiert, gegebenenfalls mit zusätzlichen Metainformationen, etwa einem Objekttyp oder einem Zeitstempel, angereichert und über geeignete Kommunikationsverfahren versendet.

Bei den Positionsdaten handelt es sich um eine aktuelle Position eines als Datenerzeuger fungierenden Objekts. Die Bewegungsdaten beschreiben eine erwartete zukünftige Trajektorie des Objekts und geben somit erwartete zukünftige Positionen an, an denen sich das Objekt in naheliegender Zukunft erwartungsgemäß befindet. Durch das Versenden solcher optionalen Bewegungsdaten können Optimierungen vorgenommen werden, durch die das Kommunikationssystem entlastet werden kann.

Ein Objekt ist entweder ein Datenerzeuger oder ein Datennutzer oder sowohl ein Datennutzer als auch ein Datenerzeuger. Bei einem Datenerzeuger handelt es sich um Objekte wie etwa Fahrzeuge, Menschen, Tiere oder Fenster in Wohngebäuden, die bezüglich einer Lichtsteuerung eines Fahrzeugs berücksichtigt werden sollen. Dazu bestimmen die Objekte ihre eigenen Positionsdaten und stellen diese den betreffenden Fahrzeugen zur Verfügung. Dazu weisen die Datenerzeuger eine entsprechende technische Ausstattung auf, etwa ein GPS-Modul und eine Kommunikationseinheit in einem Mobiltelefon oder speziell angefertigte Chips, die etwa in einen Schulranzen oder in Kleidung eingenäht sind oder bei Tieren unter die Haut implantiert sind. Bei den Datennutzern handelt es sich insbesondere um Fahrzeuge, die die Positionsdaten von Datenerzeugern verwenden, um das eigene (Fern-) Licht zu steuern. In der Regel ist ein Datennutzer auch ein Datenerzeuger, da ein Fahrzeug auch von der Lichtsteuerung entgegenkommender Fahrzeuge berücksichtigt werden soll.

Nachfolgend wird ein möglicher allgemeiner Ablauf des Verfahrens 400 gemäß einem Ausführungsbeispiel beschrieben.

Das Verfahren 400 startet mit einem Schritt 401. In einem Schritt 402 melden sich sowohl Datenerzeuger als auch Datennutzer im System an. Nach der Anmeldung generiert und versendet der Datenerzeuger im Schritt 402 seine Positionsdaten. Je nach eingesetztem Kommunikationssystem kommuniziert der Datenerzeuger entweder direkt, etwa über IEEE802.11p für eine Car2X-Kommunikation, oder über geeignete, gegebenenfalls intelligente oder mit Einheiten zur Vorverarbeitung ausgestatteten Vermittlungsstationen mit dem Datennutzer. Für die intelligente Weiterleitung durch die Vermittlungsstation ist es beispielsweise von Vorteil, wenn der Datennutzer seine Positionsdaten ebenfalls an die Vermittlungsstation überträgt.

In einem nicht erfindungsgemäßen Ausführungsbeispiel, nachdem der Datennutzer die Positionsdaten des Datenerzeugers empfangen hat, vergleicht der Datennutzer die Positionsdaten mit der eigenen Position und ermittelt so die relative Position zum Datenerzeuger. Unter Berücksichtigung der geografischen und topografischen Gegebenheiten prüft der Datennutzer zudem, ob jetzt oder zukünftig, d. h. entsprechend einer empfangenen Trajektorie des Datenerzeugers, eine Sichtverbindung zum Datenerzeuger besteht. Aus diesen Informationen und gegebenenfalls unter Berücksichtigung etwaiger Metadaten, etwa bezüglich eines Objekttyps des Datenerzeugers, leitet der Datennutzer eine Steuerungsstrategie zum Steuern seiner Scheinwerfer ab, etwa um die Scheinwerfer abzublenden, Fahrzeuge partiell aus einem Fernlichtkegel auszusparen oder Personen punktuell anzuleuchten. Auch wenn der Datennutzer keine neuen oder aktualisierten Positionsdaten empfängt, erfolgt eine regelmäßige Überprüfung und gegebenenfalls eine Anpassung der Steuerungsstrategien auf Basis der verfügbaren Positionsdaten.

In einem Schritt 403 wird geprüft, ob ein erneutes Senden der Positionsdaten notwendig ist. Ergibt sich im Schritt 403, dass ein erneutes Senden notwendig ist, so werden in einem Schritt 404 die Positionsdaten erneut generiert und gesendet. Anschließend wird in einem Schritt 405 geprüft, ob eine weitere Berücksichtigung des Datenerzeugers durch die Lichtsteuerung notwendig ist. Ist dies der Fall, so wird der Schritt 403 erneut durchgeführt. Ist dies nicht der Fall, so erfolgt in einem Schritt 406 die Abmeldung aus dem System, worauf in einem Schritt 407 das Verfahren 400 beendet wird.

Ergibt sich hingegen im Schritt 403, dass ein erneutes Senden nicht notwendig ist, so wird der Schritt 405 ausgeführt.

Soll der Datenerzeuger oder Datennutzer bei der Lichtsteuerung nicht mehr berücksichtigt werden, etwa weil ein Fenster durch einen Rollladen geschlossen wurde oder ein Auto abgestellt wurde, erfolgt im Schritt 407 die Abmeldung aus dem System, sodass alle relevanten Datenerzeuger und -nutzer darüber informiert sind.

Um den Datennutzern eine möglichst exakte Lichtsteuerung zu ermöglichen, sollten die genutzten Positionsdaten entsprechend aktuell sein. Im einfachsten Fall senden die Datenerzeuger dazu zyklisch, etwa nach Zurücklegen einer bestimmten, gegebenenfalls konfigurierbaren Wegstrecke oder in einem bestimmten, gegebenenfalls konfigurierbaren Zeitintervall, eine Aktualisierung ihrer Positionsdaten an die Datennutzer.

Alternativ wird die Aktualisierung gesendet, sobald die aktuelle Position des Datenerzeugers um einen bestimmten, gegebenenfalls konfigurierbaren Abweichungswert von einer zuletzt versendeten Position abweicht.

Denkbar ist auch, dass die Aktualisierung dann versendet wird, wenn die aktuelle Position von einer gemäß einer zuletzt übertragenen Trajektorie vorausgesagten Position um einen bestimmten, gegebenenfalls konfigurierbaren Abweichungswert abweicht.

Ferner kann zwischen beweglichen und unbeweglichen Datenerzeugern bzw. Objekten unterschieden werden. Beispielsweise wird eine Position eines unbeweglichen Objekts nur einmal bekannt gegeben, sodass in diesem Fall die Aktualisierung entfällt. Um den Kommunikationsaufwand zu reduzieren, können Positionen unbeweglicher Objekte auch dauerhaft, beispielsweise als Bestandteil einer Navigationskarte im Fahrzeug oder in einer Datenbank innerhalb oder außerhalb des Fahrzeugs, gespeichert sein.

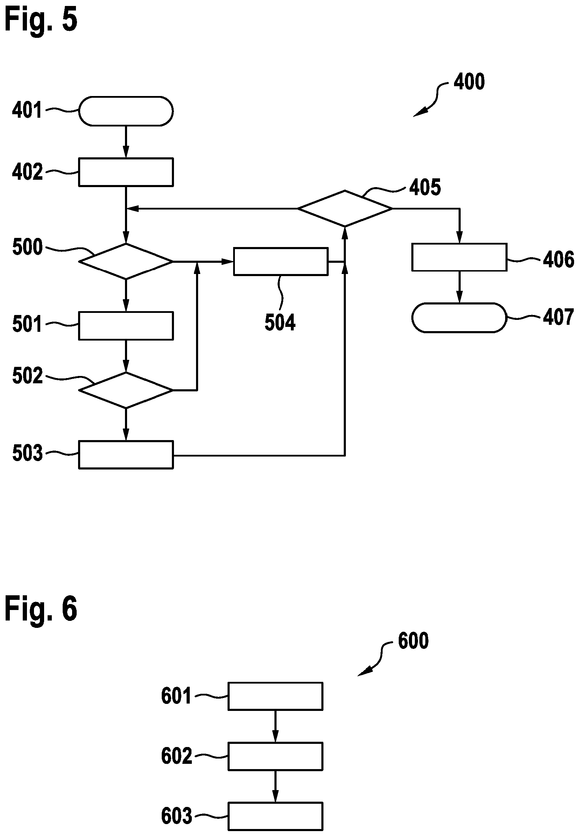

Fig. 5 zeigt ein Ablaufdiagramm eines Ausführungsbeispiels eines Verfahrens 400 zum Betreiben einer Lichtanlage für ein Fahrzeug. Im Unterschied zu Fig. 4 bezieht sich der in Fig. 5 gezeigte Ablauf auf einen Datennutzer. Hierbei wird nachfolgend auf den Schritt 402 in einem Schritt 500 überprüft, ob neue oder aktualisierte Positionsdaten hinsichtlich einer Position des Datenerzeugers vorhanden sind. Wenn ja, wird in einem Schritt 501 eine relative Position des Datennutzers zum Absender der Positionsdaten ermittelt. Anschließend wird in einem Schritt 502 geprüft, ob aktuell oder zukünftig eine Sichtverbindung zwischen dem Datennutzer und dem Datenerzeuger, d. h. dem Objekt in Gestalt des Absenders der Positionsdaten, besteht. Wenn ja, erfolgt in einem Schritt 503 unter Berücksichtigung der neuen oder aktualisierten Positionsdaten und der bereits verfügbaren Positionsdaten die Ableitung einer neuen Steuerungsstrategie zum Steuern der Scheinwerfer des als Datennutzer fungierenden Fahrzeugs. Optional können im Schritt 503 zusätzliche Metadaten bezüglich des Objekts verarbeitet werden, um die Steuerungsstrategie abzuleiten. Ergibt sich hingegen im Schritt 502, dass keine Sichtverbindung zum Objekt besteht, so wird in einem Schritt 504 eine zuletzt ermittelte Steuerungsstrategie überprüft und gegebenenfalls angepasst.

Der Schritt 504 wird auch dann ausgeführt, wenn sich im Schritt 500 ergibt, dass keine neuen oder aktualisierten Positionsdaten vorhanden sind.

Ansprechend auf den Schritt 503 bzw. den Schritt 504 wird der Schritt 405 ausgeführt.

Für die Lichtsteuerung eines Fahrzeugs sind in der Regel nur diejenigen Objekte relevant, zu denen eine Sichtverbindung besteht. Daher ist es vorteilhaft, wenn der Datennutzer nicht die Positionsdaten aller Datenerzeuger, sondern nur die Positionsdaten der relevanten, d. h. im Sichtbereich befindlichen Datenerzeuger kennt. Die Übermittlung der Positionsdaten erfolgt beispielsweise im Rahmen einer Broadcast-Kommunikation, bei der jeder Empfänger jede Nachricht, die in einem Netzwerk gesendet wird, empfängt. Eine deutlich effizientere Nutzung verfügbarer Kommunikationsressourcen lässt sich gemäß verschiedenen Ausführungsbeispielen der vorliegenden Erfindung allerdings durch folgende Methoden erreichen:
Die Positionsdaten werden per Geocast, also per geografisch begrenztem Broadcast, versendet. Die Datennutzer, die die Positionsdaten in Form einer solchen Nachricht empfangen, bewerten hierauf unter Berücksichtigung geografischer und topografischer Gegebenheiten, ob eine Sichtverbindung besteht. So kennen die Fahrzeuge alle relevanten Objekte in der relevanten Umgebung. Dementsprechend passen die Datennutzer ihre jeweilige Lichtsteuerung an.

Weiterhin ist eine direkte Kommunikation per Unicast zwischen Datennutzern und Objekten, zu denen eine Sichtverbindung besteht, denkbar.

Zusätzlich oder alternativ können die Positionsdaten, wie bereits erwähnt, in einer zentralisierten oder verteilten Datenbank gespeichert und dort je nach Objektbewegung aktualisiert werden. Die in der Datenbank gespeicherten Daten werden von dort an die relevanten Fahrzeuge zur Positionsaktualisierung gesandt, etwa via Funk in Abhängigkeit von einer aktuellen Position oder während eines Service zur Aktualisierung der Positionen statischer Objekte.

Neben den eigentlichen Positionsdaten können optionale Objektinformationen, etwa bezüglich einer zukünftigen oder vergangenen Trajektorie, eines Objekttyps oder einer Belegung eines Beifahrersitzes, übertragen werden.

Somit können neue Objekte schnell und ohne die aufwendige Entwicklung neuer Algorithmen in ein Lichtsteuerungssystem eines Fahrzeugs integriert werden. Durch die Berücksichtigung nicht beweglicher Objekte kann beispielsweise vermieden werden, dass Fahrzeuge bei Dunkelheit in Wohnhäuser leuchten oder Brutstätten seltener Vögel gestört werden.

Ferner können derartige Positionsdaten beispielsweise auch zum automatisierten Einleiten einer Gefahrenbremsung, zum hoch automatisierten Fahren, zum Ermitteln eines Verkehrsdurchsatzes oder zum Optimieren innerstädtischer Verkehrsleitsysteme verwendet werden.

Fig. 6 zeigt ein Ablaufdiagramm eines Ausführungsbeispiels eines Verfahrens 600 zum Steuern eines Scheinwerfers eines Fahrzeugs. Die nachfolgend beschriebenen Schritte des Verfahrens 600 können beispielsweise im Zusammenhang mit einem vorangehend anhand der Figuren 4 und 5 beschriebenen Verfahren ausgeführt werden.

In einem Schritt 601 werden ein durch ein Objekt bereitgestelltes und eine Position des Objekts repräsentierendes Objektpositionssignal und ein eine Position des Fahrzeugs repräsentierendes Fahrzeugpositionssignal eingelesen. Beispielsweise fungiert hierbei das Objekt als Datenerzeuger und das Fahrzeug als Datennutzer, wobei das Fahrzeug wiederum als Datenerzeuger für einen weiteren Datennutzer in Form eines weiteren Fahrzeugs fungieren kann.

Anschließend werden in einem Schritt 602 die Position des Fahrzeugs und die Position des Objekts unter Verwendung des Objektpositionssignals und des Fahrzeugpositionssignals miteinander verglichen, um eine relative Position des Fahrzeugs zum Objekt zu ermitteln.

In einem Schritt 603 wird in Abhängigkeit von der relativen Position des Fahrzeugs zum Objekt ein Steuersignal zum Steuern des Scheinwerfers erzeugt.

Fig. 7 zeigt ein Ablaufdiagramm eines Ausführungsbeispiels eines Verfahrens 700 zum Generieren von Positionsdaten zum Steuern eines Scheinwerfers eines Fahrzeugs. Die Schritte des Verfahrens 700 können beispielsweise im Zusammenhang mit einem vorangehend anhand der Figuren 4 und 5 beschriebenen Verfahren, insbesondere in Kombination mit den Schritten eines vorangehend anhand von Fig. 6 beschriebenen Verfahrens, ausgeführt werden.

Das Verfahren 700 umfasst einen Schritt 701, in dem die Positionsdaten in Form eines eine Position des Objekts repräsentierenden Objektpositionssignals durch das Objekt bereitgestellt werden.

Gemäß einer nicht erfindungsgemäßen Variante des Ausführungsbeispiels wird im Schritt 701 ein Objektpositionssignal im Form von Positions- und Bewegungsinformationen generiert und an relevante (abzublendende) Fahrzeuge verteilt. Dort werden die Daten zusammen mit eigenen Positions- und Bewegungsinformationen bezüglich einer eigenen Position bzw. Bewegung des jeweiligen Fahrzeugs verarbeitet und eine Steuerungsstrategie für die Scheinwerfer des jeweiligen Fahrzeugs abgeleitet. In einer erfindungsgemäßen Variante dieses Ausführungsbeispiels werden die Positions- und Bewegungsinformationen des Objekts zentralisiert, d.h. außerhalb des Fahrzeugs ausgewertet, wobei den betreffenden Fahrzeugen lediglich die auszuführende Steuerungsstrategie mitgeteilt wird.

Zur Generierung der Daten kommen zum einen dynamische Positionsdaten beweglicher Objekte wie GPS-Positions- oder Navigationsdaten von Fahrzeugen, GPS-Positions- oder Navigationsdaten von Mobiltelefonen oder Positionsdaten kostengünstiger GPS-Empfänger, die an Kleidung, Schulranzen oder an Haus- und Wildtieren angebracht werden können, zum anderen aber auch statische Positionsdaten feststehender Objekte wie etwa Fenster in Betracht. Insbesondere bei beweglichen Objekten wird die Position bei Bedarf aktualisiert, sodass jeweils die aktuelle Position bekannt ist. Die Häufigkeit der Positionsaktualisierung richtet sich im Wesentlichen nach der Bewegungsgeschwindigkeit des Objekts. Werden neben der aktuellen Position Informationen über eine zukünftige Trajektorie übertragen, so kann die Aktualisierungshäufigkeit gegebenenfalls reduziert werden.

Der Vorteil des Verfahrens 700 besteht darin, dass es unabhängig von einer Bilderkennung durchgeführt werden kann, d. h., das Objektpositionssignal kann auch dann bereitgestellt werden, wenn der entgegenkommende Verkehr mit ausgeschaltetem Licht unterwegs ist. So kann beispielsweise in diesem Fall automatisch abgeblendet werden und/oder ein Signal (bspw. eine Lichthupe) gegeben werden das zum Einschalten des Lichtes auffordert.

Fig. 8 zeigt ein Blockschaltbild eines Ausführungsbeispiels einer Vorrichtung 800 zum Steuern eines Scheinwerfers eines Fahrzeugs. Die Vorrichtung 800 ist in einem nicht erfindungsgemäßen Ausführungsbeispiel in das vorangehend anhand von Fig. 3 beschriebene Fahrzeug 306 integriert. Erfindungsgemäß ist die Vorrichtung jedoch von dem Fahrzeug getrennt, d.h. fahrzeugextern. Die Vorrichtung 800 weist eine Einleseeinheit 801 zum Einlesen eines Objektpositionssignals, etwa der beiden anhand von Fig. 3 beschriebenen Objektpositionssignale 310, 312, sowie eines eine Position des Fahrzeugs repräsentierenden Fahrzeugpositionssignals 802 auf. Eine Vergleichseinheit 803 ist ausgebildet, um zum Ermitteln einer relativen Position des Fahrzeugs zum Objekt die Position des Fahrzeugs und die Position des Objekts unter Verwendung der Objektpositionssignale 310, 312 und des Fahrzeugpositionssignals 802 miteinander zu vergleichen und ein die relative Position repräsentierendes Positionssignal 318 an eine Erzeugungseinheit 804 zu übertragen. Die Erzeugungseinheit 804 ist ausgebildet, um unter Verwendung des Positionssignals 318 ein Steuersignal 324 zum Steuern des Scheinwerfers in Abhängigkeit von der relativen Position zu erzeugen.

Fig. 9 zeigt ein Blockschaltbild eines nicht erfindungsgemäßen Ausführungsbeispiels einer Vorrichtung 900 zum Generieren von Positionsdaten zum Steuern eines Scheinwerfers eines Fahrzeugs. Beispielsweise kann die Vorrichtung 900 im Zusammenhang mit einem Objekt in Form eines Fahrzeugs 300, wie es vorangehend anhand von Fig. 3 beschrieben ist, verwendet werden. Entsprechend weist die Vorrichtung 900 eine Bereitstellungseinheit 901 zum Bereitstellen des Objektpositionssignals 310 auf.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (600) zum Steuern eines Scheinwerfers (104) eines Fahrzeugs (100; 300, 302, 304, 306), wobei das Verfahren (600) folgende Schritte umfasst:
Einlesen (601) eines durch ein Objekt (102; 300, 302, 304, 306) oder einer Beobachtereinheit bereitgestellten und eine Position des Objekts (102; 300, 302, 304, 306) repräsentierenden Objektpositionssignals (310, 312, 314, 316) und eines eine Position des Fahrzeugs (100; 300, 302, 304, 306) repräsentierenden Fahrzeugpositionssignals (802);
Vergleichen (602) der Position des Fahrzeugs (100; 300, 302, 304, 306) und der Position des Objekts (102; 300, 302, 304, 306) unter Verwendung des Objektpositionssignals (310, 312, 314, 316) und des Fahrzeugpositionssignals (802), um eine relative Position des Fahrzeugs (100; 300, 302, 304, 306) zum Objekt (102; 300, 302, 304, 306) zu ermitteln; und
Erzeugen (603) eines Steuersignals (320, 322, 324) zum Steuern des Scheinwerfers (104) in Abhängigkeit von der relativen Position des Fahrzeugs (100; 300, 302, 304, 306) zum Objekt (102; 300, 302, 304, 306),
**dadurch gekennzeichnet, dass**
der Schritt des Erzeugens (603) durch eine von dem Fahrzeug (100; 300, 302, 304, 306) getrennte Datenverarbeitungseinheit (308) ausgeführt wird.

2. Verfahren (600) gemäß Anspruch 1, **dadurch gekennzeichnet, dass** im Schritt des Erzeugens (603) das Steuersignal (320, 322, 324) bereitgestellt wird, um den Scheinwerfer (104) abzublenden und/oder einen Scheinwerferstrahl vom Objekt (102; 300, 302, 304, 306) wegzulenken oder auf das Objekt (102; 300, 302, 304, 306) hinzulenken.

3. Verfahren (600) gemäß einem der vorangegangenen Ansprüche, **dadurch gekennzeichnet, dass** der Schritt des Einlesens (601) und/oder der Schritt des Vergleichens (602) durch eine von dem Fahrzeug (100; 300, 302, 304, 306) getrennte Datenverarbeitungseinheit (308) ausgeführt wird, insbesondere wobei in einem Schritt des Übertragens das Steuersignal (320, 322, 324) durch die Datenverarbeitungseinheit (308) an das Fahrzeug (100; 300, 302, 304, 306) übertragen wird.

4. Verfahren (600) gemäß einem der vorangegangenen Ansprüche, **gekennzeichnet durch** einen Schritt des Ermittelns einer Sichtverbindung zwischen dem Fahrzeug (100; 300, 302, 304, 306) und dem Objekt (102; 300, 302, 304, 306) unter Verwendung des Objektpositionssignals (310, 312, 314, 316) und des Fahrzeugpositionssignals (802), wobei im Schritt des Erzeugens (603) das Steuersignal (320, 322, 324) erzeugt wird, wenn im Schritt des Ermitteins ermittelt wurde, dass eine Sichtverbindung zwischen dem Fahrzeug (100; 300, 302, 304, 306) und dem Objekt (102; 300, 302, 304, 306) besteht.

5. Verfahren (600) gemäß einem der vorangegangenen Ansprüche, **dadurch gekennzeichnet, dass** im Schritt des Einlesens (601) ferner ein durch das Objekt (102; 300, 302, 304, 306) bereitgestelltes und eine Trajektorie des Objekts (102; 300, 302, 304, 306) repräsentierendes Objekttrajektoriensignal eingelesen wird, wobei im Schritt des Vergleichens (602) die Position des Fahrzeugs (100; 300, 302, 304, 306) unter Verwendung des Objekttrajektoriensignals ferner mit der Trajektorie des Objekts (102; 300, 302, 304, 306) verglichen wird, um die relative Position des Fahrzeugs (100; 300, 302, 304, 306) zum Objekt (102; 300, 302, 304, 306) zu bestimmen, insbesondere um eine zukünftig erwartete relative Position des Fahrzeugs (100; 300, 302, 304, 306) zum Objekt (102; 300, 302, 304, 306) zu bestimmen.

6. Verfahren (600) gemäß einem der vorangegangenen Ansprüche, **dadurch gekennzeichnet, dass** im Schritt des Einlesens (601) eine zusätzliche Objektinformation, insbesondere eine Information über einen Objekttyp, eingelesen wird, wobei im Schritt des Erzeugens (603) das Steuersignal (320, 322, 324) unter Verwendung der zusätzlichen Objektinformation erzeugt wird.

7. Verfahren (600) gemäß einem der vorangegangenen Ansprüche, **dadurch gekennzeichnet, dass** im Schritt des Einlesens (601) ferner ein durch das Objekt (102; 300, 302, 304, 306) bereitgestelltes und eine weitere Position des Objekts (102; 300, 302, 304, 306) repräsentierendes weiteres Objektpositionssignal eingelesen wird, wobei die weitere Position des Objekts (102; 300, 302, 304, 306) eine unter Verwendung einer Trajektorie des Objekts (102; 300, 302, 304, 306) vorhergesagte zukünftige Position des Objekts (102; 300, 302, 304, 306) repräsentiert, wobei im Schritt des Vergleichens (602) die Position des Fahrzeugs (100; 300, 302, 304, 306) und die weitere Position des Objekts (102; 300, 302, 304, 306) unter Verwendung des weiteren Objektpositionssignals miteinander verglichen werden, um die relative Position des Fahrzeugs (100; 300, 302, 304, 306) zum Objekt (102; 300, 302, 304, 306) zu ermitteln.

8. Fahrzeugexterne Vorrichtung (800), die ausgebildet ist, um jeden Schritt des Verfahrens (600) gemäß einem der vorangegangenen Ansprüche auszuführen und/oder anzusteuern.

9. Computerprogramm umfassend Befehle, die bei der Ausführung des Programms durch einen Computer diesen veranlassen, das Verfahren (600) gemäß einem der vorangegangenen Ansprüche 1 bis 7 auszuführen und/oder anzusteuern.

10. Maschinenlesbares Speichermedium, auf dem das Computerprogramm nach Anspruch 9 gespeichert ist.

## Claims

1. Method (600) for controlling a headlight (104) of a vehicle (100; 300, 302, 304, 306), wherein the method (600) comprises the following steps:
reading in (601) an object position signal (310, 312, 314, 316) provided by an object (102; 300, 302, 304, 306) or an observer unit and representing a position of the object (102; 300, 302, 304, 306), and a vehicle position signal (802) representing a position of the vehicle (100; 300, 302, 304, 306);
comparing (602) the position of the vehicle (100; 300, 302, 304, 306) on the position of the object (102; 300, 302, 304, 306) using the object position signal (310, 312, 314, 316) and the vehicle position signal (802), in order to determine a relative position of the vehicle (100; 300, 302, 304, 306) with respect to the object (102; 300, 302, 304, 306); and
generating (601) a control signal (320, 322, 324) for controlling the headlight (104) as a function of the relative position of the vehicle (100; 300, 302, 304, 306) with respect to the object (102; 300, 302, 304, 306),
**characterized in that**
the generating step (603) is executed by a data processing unit (308) which is separate from the vehicle (100; 300, 302, 304, 306).

2. Method (600) according to Claim 1, **characterized in that**, in the generating step (603), the control signal (320, 322, 324) is provided in order to dip the headlight (104) and/or to direct a headlight beam away from the object (102; 300, 302, 304, 306) or to direct it towards the object (102; 300, 302, 304, 306).

3. Method (600) according to one of the preceding claims, **characterized in that** the reading-in step (601) and/or the comparison step (602) is executed by a data processing unit (308) which is separate from the vehicle (100; 300, 302, 304, 306), in particular wherein, in a transmission step, the control signal (320, 322, 324) is transmitted to the vehicle (100; 300, 302, 304, 306) by the data processing unit (308).

4. Method (600) according to one of the preceding claims, **characterized by** a step of determining a line-of-sight connection between the vehicle (100; 300, 302, 304, 306) and the object (102; 300, 302, 304, 306) using the object position signal (310, 312, 314, 316) and the vehicle position signal (802), wherein, in the generating step (603), the control signal (320, 322, 324) is generated if it has been determined in the determining step that a line-of-sight connection is present between the vehicle (100; 300, 302, 304, 306) and the object (102; 300, 302, 304, 306).

5. Method (600) according to one of the preceding claims, **characterized in that**, in the reading-in step (601), an object trajectory signal provided by the object (102; 300, 302, 304, 306) and representing a trajectory of the object (102; 300, 302, 304, 306) is read in, wherein, in the comparison step (602), the position of the vehicle (100; 300, 302, 304, 306) is also compared with the trajectory of the object (102; 300, 302, 304, 306) using the object trajectory signal, in order to determine the relative position of the vehicle (100; 300, 302, 304, 306) with respect to the object (102; 300, 302, 304, 306), in particular in order to determine a relative position of the vehicle (100; 300, 302, 304, 306) with respect to the object (102; 300, 302, 304, 306) which is to be expected in future.

6. Method (600) according to one of the preceding claims, **characterized in that**, in the reading-in step (601), additional object information, in particular information about a type of object is read in, wherein, in the generating step (603), the control signal (320, 322, 324) is generated using the additional object information.

7. Method (600) according to one of the preceding claims, **characterized in that**, in the reading-in step (601), a further object position signal provided by the object (102; 300, 302, 304, 306) and representing a further position of the object (102; 300, 302, 304, 306) is read in, wherein the further position of the object (102; 300, 302, 304, 306) represents a future position of the object (102; 300, 302, 304, 306) which is predicted using a trajectory of the object (102; 300, 302, 304, 306), wherein, in the comparison step (602), the position of the vehicle (100; 300, 302, 304, 306) and the further position of the object (102; 300, 302, 304, 306) are compared with one another using the further object position signal, in order to determine the relative position of the vehicle (100; 300, 302, 304, 306) with respect to the object (102; 300, 302, 304, 306).

8. Vehicle-external device (800) which is designed to execute and/or actuate each step of the method (600) according to one of the preceding claims.

9. Computer program comprising commands which, during the execution of the program by a computer, cause said computer to execute and/or actuate the method (600) according to one of the preceding Claims 1 to 7.

10. Machine-readable storage medium in which the computer program according to Claim 9 is stored.

## Revendications

1. Procédé (600) de commande d'un phare (104) d'un véhicule (100 ; 300, 302, 304, 306), le procédé (600) comprenant les étapes suivantes :
lire (601) un signal de position d'objet (310, 312, 314, 316) fourni par un objet (102 ; 300, 302, 304, 306) ou une unité d'observation et représentant une position de l'objet (102 ; 300, 302, 304, 306) et un signal de position de véhicule (802) représentant une position du véhicule (100 ; 300, 302, 304, 306) ;
comparer (602) la position du véhicule (100 ; 300, 302, 304, 306) et la position de l'objet (102 ; 300, 302, 304, 306) à l'aide du signal de position d'objet (310, 312, 314, 316) et du signal de position de véhicule (802) pour déterminer une position relative du véhicule (100 ; 300, 302, 304, 306) par rapport à l'objet (102 ; 300, 302, 304, 306) ; et
générer (603) un signal de commande (320, 322, 324) destiné à commander le phare (104) en fonction de la position relative du véhicule (100 ; 300, 302, 304, 306) par rapport à l'objet (102 ; 300, 302, 304, 306), **caractérisé en ce que**
l'étape de génération (603) est réalisée par une unité de traitement de données (308) séparée du véhicule (100 ; 300, 302, 304, 306).

2. Procédé (600) selon la revendication 1, **caractérisé en ce que** dans l'étape de génération (603) le signal de commande (320, 322, 324) est fourni afin de passer le phare (104) en mode code et/ou de dévier un faisceau de phare de l'objet (102 ; 300, 302, 304, 306) ou de le diriger vers l'objet (102 ; 300, 302, 304, 306).

3. Procédé (600) selon l'une des revendications précédentes, **caractérisé en ce que** l'étape de lecture (601) et/ou l'étape de comparaison (602) sont réalisées par l'unité de traitement de données (308), séparée du véhicule (100 ; 300, 302, 304, 306), en particulier dans une étape de transmission le signal de commande (320, 322, 324) étant transmis au véhicule (100 ; 300, 302, 304, 306) par l'unité de traitement de données (308).

4. Procédé (600) selon l'une des revendications précédentes, **caractérisé par** une étape de détermination d'un contact visuel entre le véhicule (100 ; 300, 302, 304, 306) et l'objet (102 ; 300, 302, 304, 306) à l'aide du signal de position d'objet (310, 312, 314, 316) et du signal de position de véhicule (802), à l'étape de génération (603) le signal de commande (320, 322, 324) étant généré s'il a été déterminé à l'étape de détermination qu'il existe un contact visuel entre le véhicule (100 ; 300, 302, 304, 306) et l'objet (102 ; 300, 302, 304, 306).

5. Procédé (600) selon l'une des revendications précédentes, **caractérisé en ce qu'**un signal de trajectoire d'objet fourni par l'objet (102 ; 300, 302, 304, 306) et représentant une trajectoire de l'objet (102 ; 300, 302, 304, 306) est en outre lu à l'étape de lecture (601), à l'étape de comparaison (602) la position du véhicule (100 ; 300, 302, 304, 306) étant en outre comparée à la trajectoire de l'objet (102 ; 300, 302, 304, 306) à l'aide du signal de trajectoire d'objet afin de déterminer la position relative du véhicule (100 ; 300, 302, 304, 306) par rapport à l'objet (102 ; 300, 302, 304, 306), en particulier afin de déterminer une position relative, attendue dans l'avenir, du véhicule (100 ; 300, 302, 304, 306) par rapport à l'objet (102 ; 300, 302, 304, 306).

6. Procédé (600) selon l'une des revendications précédentes, **caractérisé en ce qu'**une information supplémentaire sur l'objet, en particulier une information sur un type d'objet, est lue à l'étape de lecture (601), le signal de commande (320, 322, 324) étant généré à l'étape de génération (603) à l'aide de l'information supplémentaire sur l'objet.

7. Procédé (600) selon l'une des revendications précédentes, **caractérisé en ce qu'**un autre signal de position d'objet, fourni par l'objet (102 ; 300, 302, 304, 306) et représentant une autre position de l'objet (102 ; 300, 302, 304, 306) est lu à l'étape de lecture (601), l'autre position de l'objet (102 ; 300, 302, 304, 306) représentant une position future de l'objet (102 ; 300, 302, 304, 306) qui est prédite à l'aide d'une trajectoire de l'objet (102 ; 300, 302, 304, 306), la position du véhicule (100 ; 300, 302, 304, 306) et l'autre position de l'objet (102 ; 300, 302, 304, 306) étant comparées l'une à l'autre à l'étape de comparaison (602) à l'aide de l'autre signal de position d'objet afin de déterminer la position relative du véhicule (100 ; 300, 302, 304, 306) par rapport à l'objet (102 ; 300, 302, 304, 306).

8. Dispositif (800), extérieur au véhicule, qui est destiné à mettre en œuvre et/ou commander chaque étape du procédé (600) selon l'une des revendications précédentes.

9. Logiciel comprenant des instructions qui, lorsque le logiciel est exécuté par un ordinateur, amènent l'ordinateur à mettre en œuvre et/ou commander le procédé (600) selon l'une des revendications précédentes 1 à 7.

10. Support de stockage lisible par machine sur lequel est stocké le logiciel la revendication 9.
